# EUROPEAN PATENT SPECIFICATION

(11) **EP 1 558 464 B1**
(45) Date of publication and mention of the grant of the patent: **22.08.2018**
(21) Application number: 03759094.0
(22) Date of filing: 29.10.2003
(51) Int. Cl.: B60P 3/40, F03D 1/00

(54) **METHOD AND DEVICE FOR SUPPORTING A SELF-SUPPORTING LOAD ON UNDERCARRIAGES**
VERFAHREN, VORRICHTUNG ZUM TRANSPORT VON SELBSTTRAGENDEN FORMKÖRPERN AUF ZWEI FAHRGESTELLEN
PROCEDE ET DISPOSITIF DE SUPPORT DE CHARGE AUTOPORTANTE SUR DES CHASSIS DE ROULEMENT

(30) Priority: 30.10.2002 NL 1021780; 31.10.2002 NL 1021790
(43) Date of publication of application: 03.08.2005
(73) Proprietor: Nooteboom Group B.V., 6603 BV Wijchen (NL)
(72) Inventor: VAN DE VONDERVOORT, Vincentius, Henricus, Antony, 47559 Kranenburg (DE)
(74) Representative: Bartelds, Erik
(86) International application number: PCT/NL2003/000739
(87) International publication number: WO 2004/041589

(56) References cited:
- DE-A- 10 063 136
- DE-A1- 2 239 990
- US-A- 3 315 974
- US-A- 4 168 931
- US-A- 4 231 709
- PATENT ABSTRACTS OF JAPAN vol. 2002, no. 06, 4 June 2002 (2002-06-04) & JP 2002 059776 A (NIPPON EXPRESS CO LTD), 26 February 2002 (2002-02-26)

## Description

The invention relates to a method and a device for supporting a self-supporting load on undercarriages or axle systems for the purpose of transport thereof. The term 'undercarriage' or 'axle system' is here understood to mean any chassis part with one or more axles.

In particular, the invention relates to a method for supporting on an undercarriage an end of a self-supporting load as defined in the preamble of claim 1.

From e.g. JP 2002-059776 it is known to suspend a self-supporting load, for instance so-called tower sections, i. e. parts of the mast of a wind turbine, for transport on the road or on a construction site, between two undercarriages, for instance a tractive unit and a rear axle system such as a rear dolly. On both ends of the tower section is then mounted an adapter, the foremost of which is provided with a coupling pin which can be connected to the kingpin of the tractive unit. The rear adapter is placed in similar manner on the rear dolly.

The tower section itself herein functions as it were as the chassis of the trailer formed by the tower section, the two adapters and the rear dolly.

The adapter used in this known method consists of a rigid, rectangular or square, standing frame which is fixed to an end surface of the tower section. Protruding from this standing frame are two lying and two inclining beams which form two triangular side frames. These side frames are in turn connected by a cross beam which carries the coupling pin in the middle.

A drawback of the known method is that the adapter used therein cannot be adapted to the dimensions of the tower section for transporting. Since masts of wind turbines generally taper toward the top, the tower sections all have different diameters, so that the adapter, which will be dimensioned for the largest (lower) tower part, is in fact too large for the other tower parts. In addition, the adapter comes under relatively great strain of bending, since at the top and bottom the standing frame protrudes beyond the lying and inclining beams of the side frames. This in turn entails the adapter having to be very strong and therefore of heavy construction, whereby the payload of the combination of tractive unit and. trailer for a given total weight or axle load is limited. Finally, the adapter is relatively long, whereby the length of the tractive unit-trailer combination becomes very great and it is difficult to maneuver.

In addition, an adapter is already known which has a standing frame with a telescopic embodiment and can thus be adapted to the dimensions of the tower section by being retracted or extended. This adapter, an example of which is disclosed in DE 100 63 136, is even heavier than a fixed adapter and has the same drawbacks in respect of the construction length.

The prior art document US 4 231 709 discloses a method having the features of the preamble of claim 1. A demountable transporter for ISPO containers is made up of a towing dolly and a trailing dolly. Each dolly has an axle with two tires and a frame structure. Lower attaching means includes downwardly extending frame members carrying a pivotal bracket that runs the width of the container. Upper attachment means include a pair of hydraulic ram assemblies which are pivotally attached to the frame structure.

In order to attach each dolly to the container the pivotable bracket is first moved to the container by separate wheeled jack assemblies. Then the lower bracket is latched to the lower corner fittings of the container. Subsequently the hydraulic rams are (presumably manually) maneuvered to line them up with the upper corner fittings of the container. After the hydraulic rams have been latched to the container the jack assemblies are removed and the container is lifted off the ground by extending the hydraulic rams. This arrangement is only intended for use with ISO containers, the dimensions of which are fixed and small enough to allow manual intervention.

The invention now has for its object to provide a method wherein these drawbacks no longer occur, or do so to a lesser extent. According to the invention this is achieved in a method having the features of the preamble of claim 1 in that the angle between the lower and upper supports can be adapted to the dimensions of the end of the load by actuating moving means connected between the supports. By making use for the support of the load of supports which engage directly on the load, it is possible to dispense with the use of separate adapters with heavy frames taking up much space. Adapting the angle between the supports to the dimensions of the load allows any load to be supported optimally.

When the angle between the supports is adapted such that only some of the supports absorb the weight of the load and the rest of the supports absorb only longitudinal forces from the load, the supports are loaded substantially by only longitudinal forces and can be given a relatively light form.

The support(s) taking up the weight of the load can herein enclose an acute angle with the horizontal, and the rest of the supports can run substantially horizontally.

In order to limit the loads on the supports as much as possible, the supports preferably converge at or close to a point where the forces are transmitted into the undercarriage.

The different supports are preferably placed successively into engagement with a load and then moved to a position in which the load is lifted. In this manner the load can be picked up quickly and easily.

The invention also relates to a device with which the above described method can be performed. The invention provides for this purpose a device for supporting on an undercarriage an end of a self-supporting load as defined in claim 6.

The supports can advantageously be adapted to be loaded substantially in only lengthwise direction, so that the device can be embodied in relatively light form.

An efficient construction is achieved herein when the support adjustable in lengthwise direction encloses an acute angle with the horizontal, and at least one non-adjustable support runs substantially horizontally.

The device is advantageously provided with means for coupling the supports to the undercarriage, wherein the supports converge in the vicinity of the coupling means. The loads are thus transmitted along the shortest possible path onto the undercarriage.

In respect of the manoeuvrability of the trailer formed by the load and the undercarriages, the coupling means are preferably rotatable relative to the undercarriage. So as to prevent the trailer, which is formed by the undercarriages with the supports and the load therebetween, here becoming unstable at higher speeds, means can be provided for blocking the rotation movement of the coupling means.

In order to ensure a stable support of the load, the device preferably has two supports running substantially horizontally. The ends of the two supports running substantially horizontally can herein be further connected by a beam so that they are oriented accurately relative to each other under all conditions.

The invention finally also relates to a combination of an undercarriage and a device of the above described type.

In such a combination the undercarriage can form part of a tractive unit or form a separate carriage or dolly.

The invention is now elucidated on the basis of four embodiments, wherein reference is made to the annexed drawing, in which:
Fig. 1 is a schematic perspective view of a first embodiment of the support device according to the invention in engagement with an end of a load,
Fig. 2 shows a view corresponding with fig. 1 of a second embodiment of the support device in combination with an undercarriage,
Fig. 3-6 show schematic perspective views of different steps for picking up a load with a support device according to a third embodiment of the invention,
Fig. 7 shows a detail view along arrow VII in fig. 5,
Fig. 8 is a side view of a fourth embodiment of the support device during use on the front side of the load,
Fig. 9 shows a view corresponding with fig. 8 during use on the rear side, and
Fig. 10 and 11 show top views of the support device and the undercarriage in a bend when the coupling means arranged therebetween are rotatable, respectively when the rotation movement thereof is blocked.

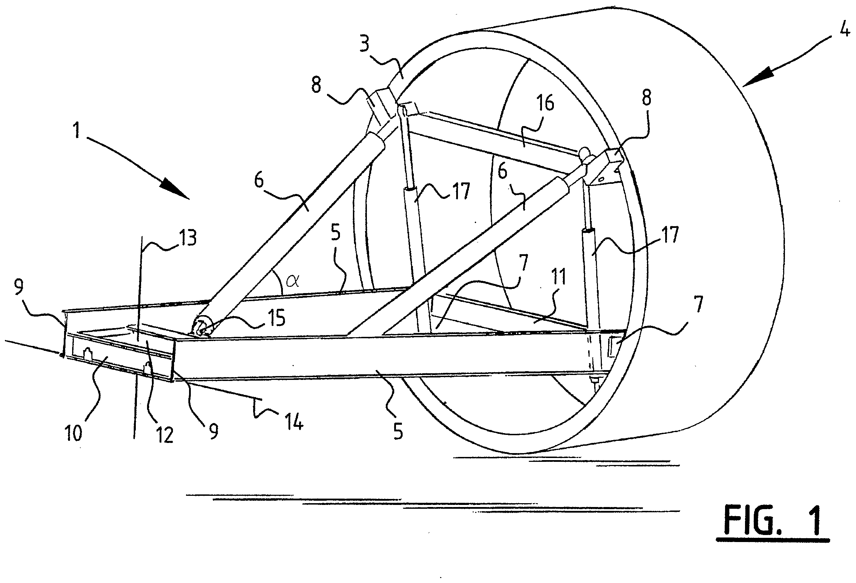

A device 1 for supporting on an undercarriage 2 (not shown here) an end 3 of a self-supporting load 4, here a tower section (fig. 1), comprises two lower supports 5 and two upper supports 6 which can be connected to undercarriage 2 and engage with their ends 7, 8 on the end edge or flange 3 of load 4. Both the lower supports 5 here enclose an angle in the horizontal plane and are connected close to their ends 9 by a relatively short cross beam 10 and close to their ends 7 by a longer cross beam 11. In the middle of the short cross beam 10 are arranged means 12 for coupling the support device 1 to undercarriage 2. These coupling means 12 are rotatable on both a vertical axis 13 and a horizontal axis 14.

The upper supports 6 are here only loadable in their lengthwise direction, while the lower supports 5 can absorb both longitudinal and transverse forces. Upper supports 6 are further adjustable in their lengthwise direction, while the angle α in the vertical plane between upper supports 6 and lower supports 5 is likewise adjustable. In the shown embodiment the upper supports 6 are embodied as hydraulic cylinders which are connected with their lower ends 15 to lower supports 5 for pivoting in different directions, for instance by means of ball joints. In the shown embodiment the upper ends 8 of upper supports 6 are connected to each other by a cross beam 16. For the purpose of adjusting the angle α between the upper and lower supports 6, 5 there are provided moving means 17, here in the form of two vertically oriented hydraulic cylinders engaging on the ends 8 of upper supports 6.

By adjusting the angle α while simultaneously adapting the length of upper supports 6 and optionally tilting the lower supports 5 about the horizontal axis 14, the four outer ends 7, 8 of supports 5, 6 can be placed in engagement with the end 3 of load 4 in a manner such that the upward inclining supports 6 exert a pressure force on the end surface of load 4, the vertical component of which is substantially equal to the weight of the load, or at least the part thereof which must be carried by this undercarriage 2, while the lower supports 5 running substantially horizontally exert virtually only a tensile force on load 4. The ends 7, 8 of the lower and upper supports 5, 6 do not therefore have to be connected in force-transmitting manner, and the vertical cylinders 17 are in principle not loaded.

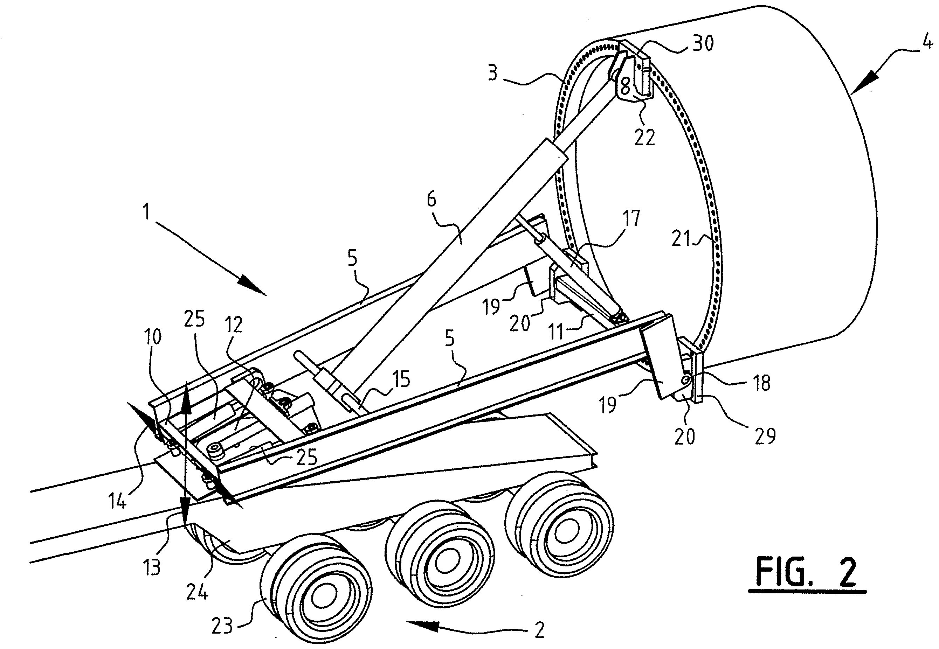

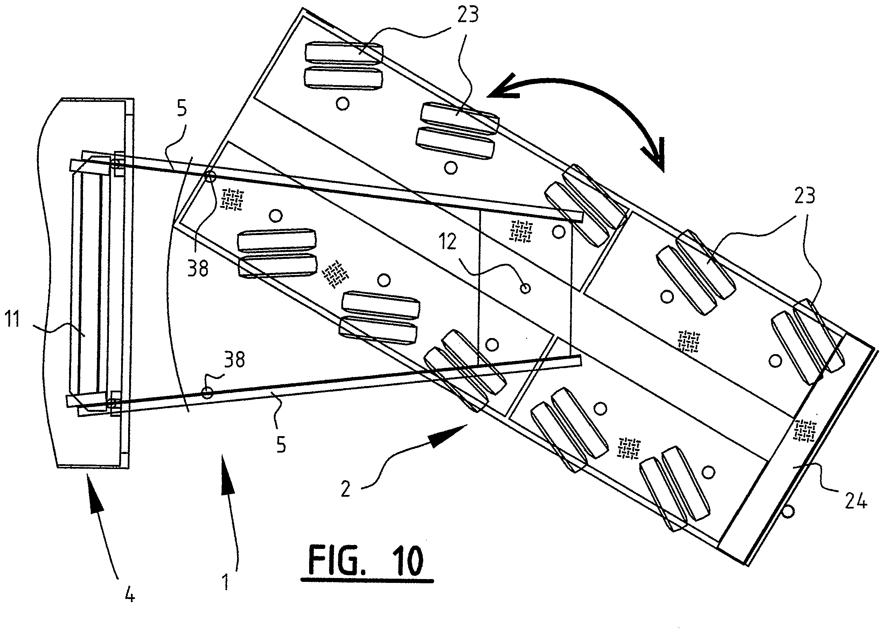

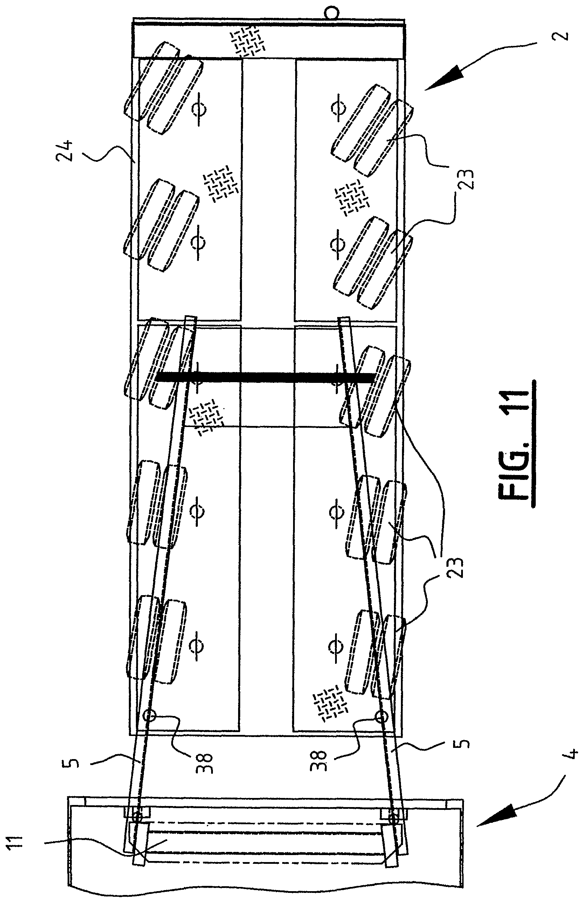

In an alternative embodiment of the support device 1 (fig. 2), only a single upper support 6 is provided. The angle adjusting means 17 are therefore formed here by a single hydraulic cylinder which engages on the housing of the support 6 embodied as hydraulic cylinder. Cross beam 11 between the ends 7 of lower supports 5 is here suspended from arms 19 for pivoting about a horizontal axis 18 and carries two engaging plates 20 which are fastened to a flange 21 on the end 3 of load 4. A third engaging plate 22 is pivotally mounted on the end 8 of upper support 6. In the shown embodiment the undercarriage 2 forms a so-called jeep dolly 36, a short intermediate trailer coupled to a tractive vehicle (not shown here). This jeep dolly has three axle systems 23 accommodated in a chassis 24. Arranged here between the rotatable coupling means 12 and cross beam 10 are two master cylinders 25 which are connected hydraulically to steering cylinders of a rear undercarriage, and whereby a rotation of support device 1 relative to undercarriage 2 is converted into a steering movement of the wheels of the rear undercarriage, the so-called trailer steering (fig. 11). The connection between the front and rear undercarriage can be broken by short-circuiting the hydraulic circuit of these cylinders 25, whereby the rear undercarriage can be steered as rear dolly (fig. 10).

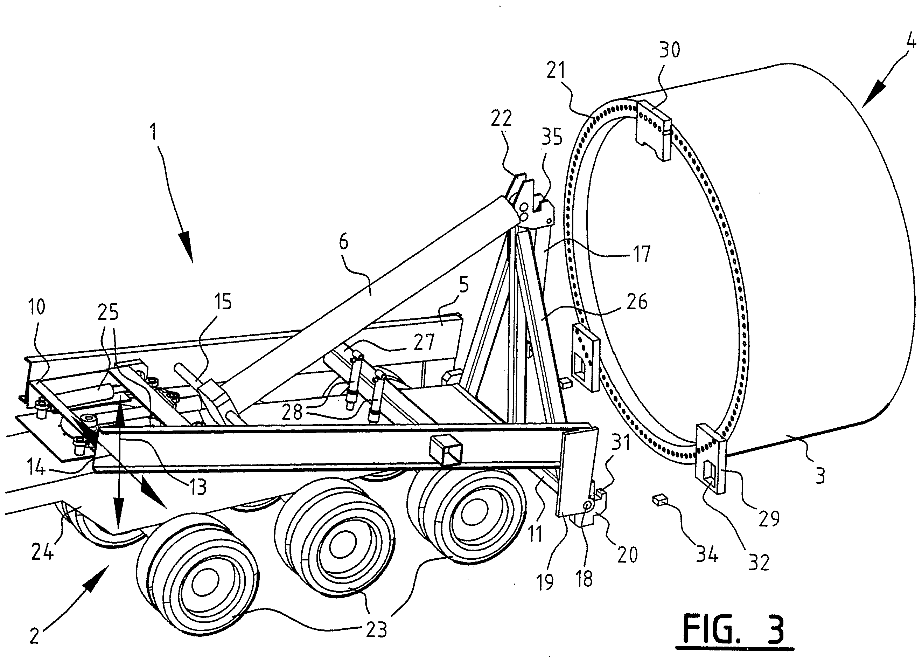

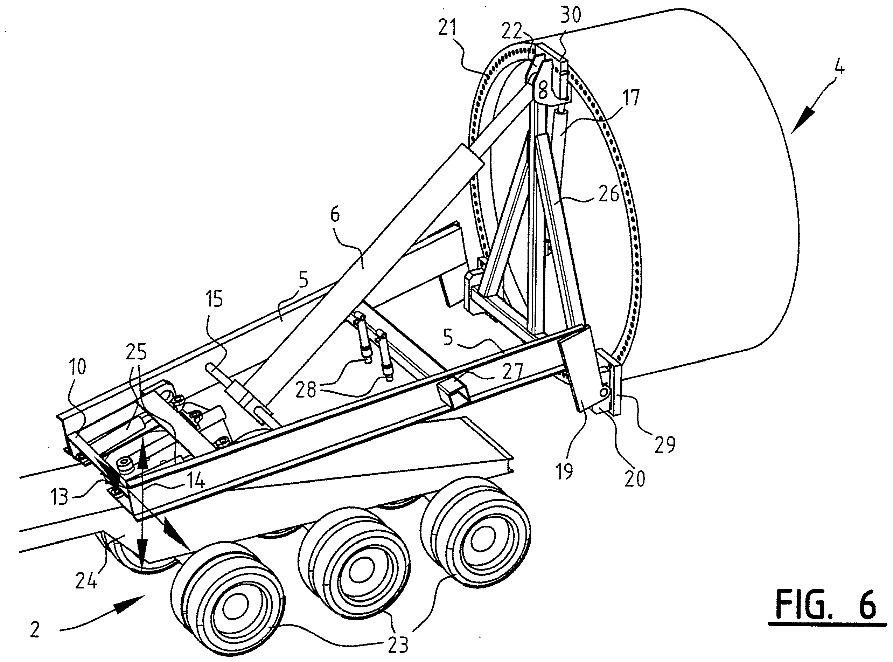

The manner in which the load 4 can be picked up by support device 1 according to the invention is now elucidated with reference to fig. 3-6 in which a third embodiment is shown. This is distinguished from the second embodiment according to fig. 2 in that the engaging elements 20, 22 are mutually connected by a sub-frame 26 standing on cross beam 11. The angle adjusting means 17 in the form of a hydraulic cylinder are mounted on this sub-frame 26. In addition, this embodiment of support device 1 is provided with an additional cross beam 27 bearing two lifting cylinders 28 which can support on undercarriage 2 during coupling and uncoupling of load 4.

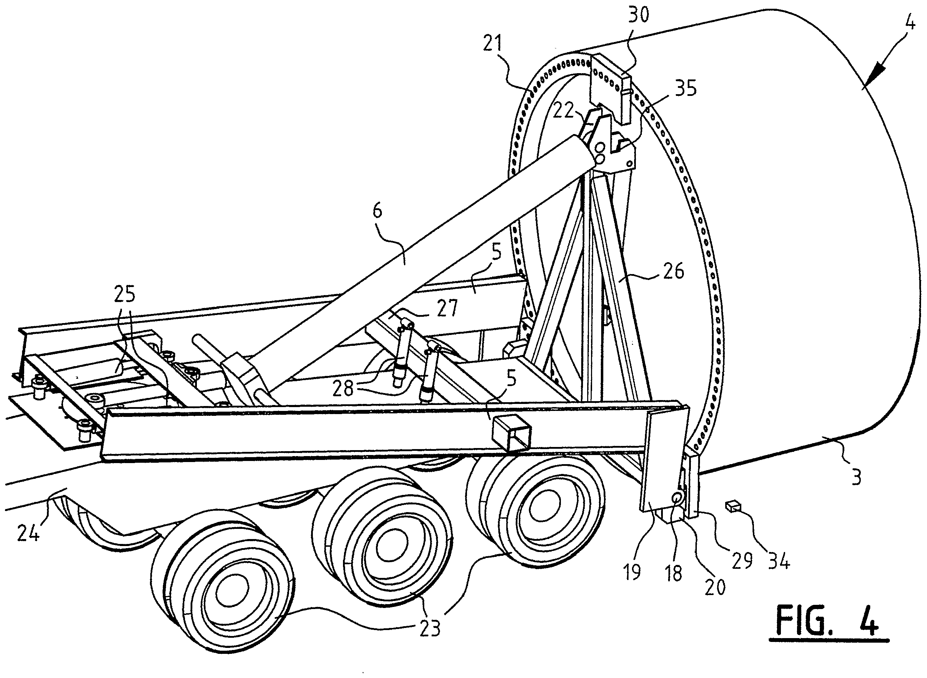

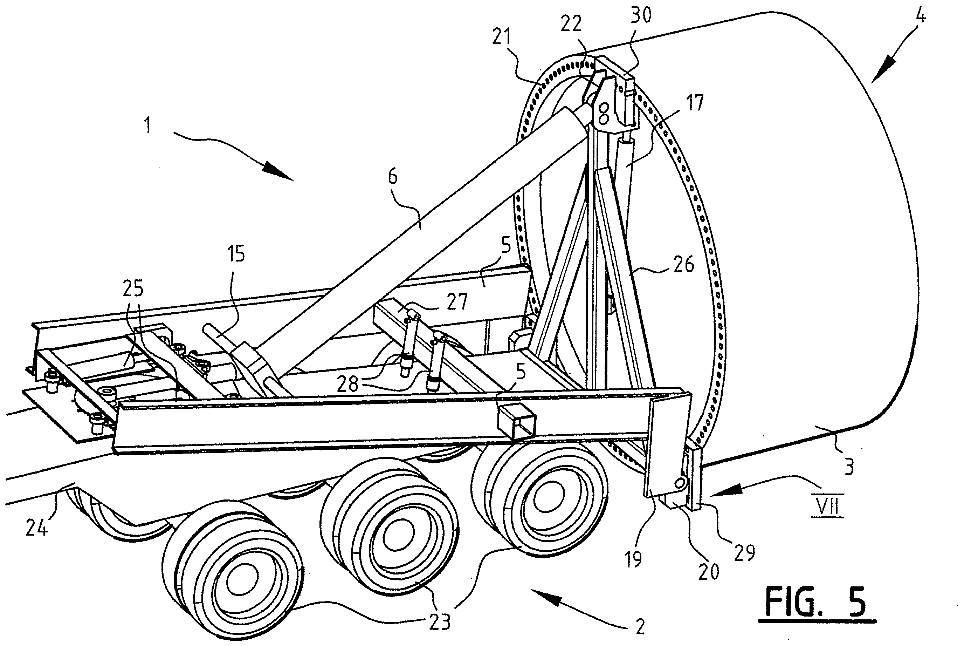

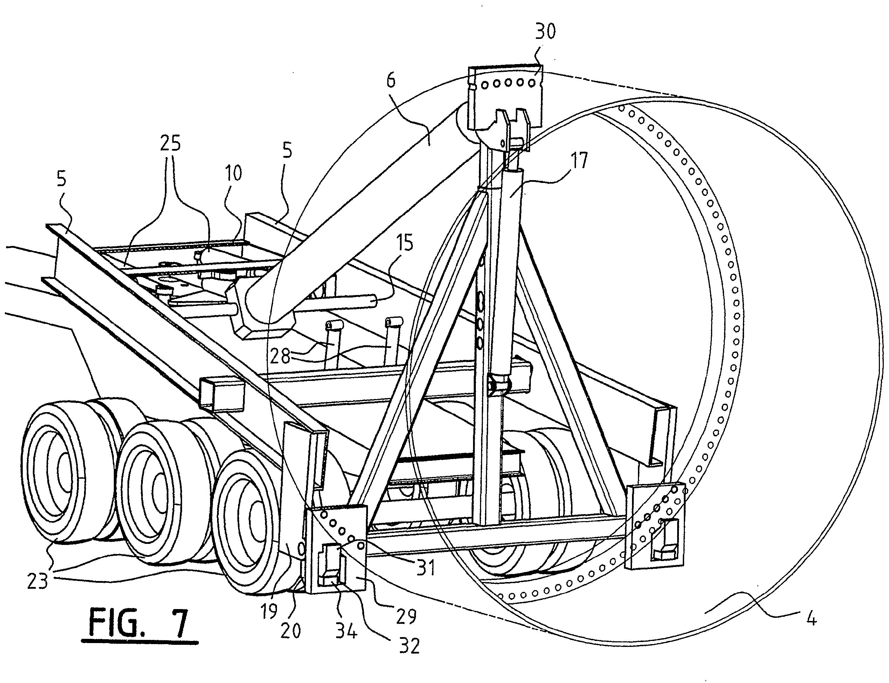

In order to pick up load 4 the upper support 6 and angle adjusting means 17 are in the first instance fully retracted (fig. 3). Lifting cylinders 28 are extended so far that the lower engaging elements 20 are just clear of the road. In this position the support device 1 is moved toward load 4 by moving undercarriage 2. Engaging plates 29,30 are herein already fixed onto the end surface 3 of load 4. Undercarriage 2 is moved so closely against load 4 that hooks 31 of the lower engaging elements 20, after being brought to the correct height using lifting cylinders 28, are placed in openings 32 of the lower engaging plates 29 (fig. 4). Lifting cylinders 28 are then extended further until hooks 31 each press against an upper edge 32 of the associated opening 32. This movement could optionally also be performed using the suspension of undercarriage 2. Hooks 31 are locked in this position by placing filling blocks 34 thereunder (fig. 7). By extending the cylinders 6 and 17 a recess 35 of element 22 is then brought into engagement with the lower edge of the upper engaging plate 30 (fig. 5). Finally, lifting cylinders 28 are retracted until they are free of the chassis 24 of undercarriage 2, and the load is brought to a desired height by extending the upper support 6. The lower supports 5 herein follow the movement of load 4 and are thus also moved upward, wherein the formed triangle of forces changes shape, although the weight of the load is still taken up almost solely as a pressure force by the upper support 6, while the lower supports 5 absorb only longitudinal forces (tensile forces).

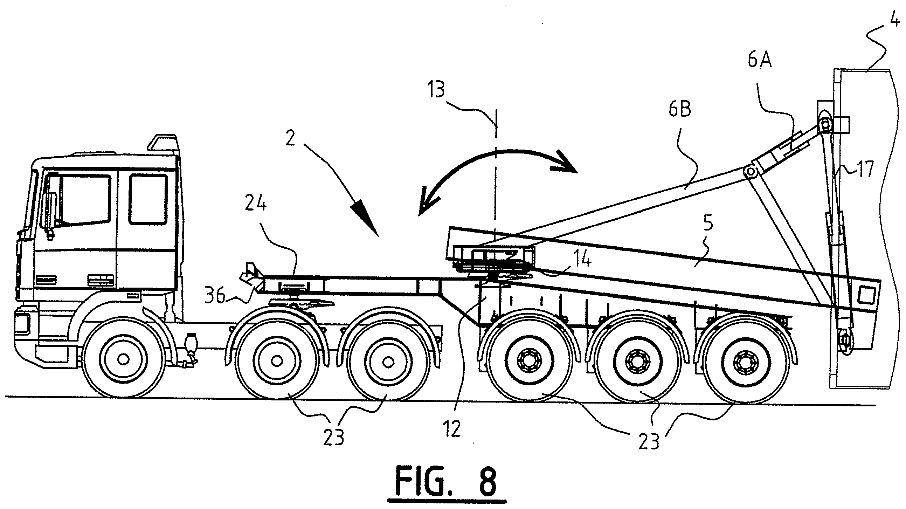

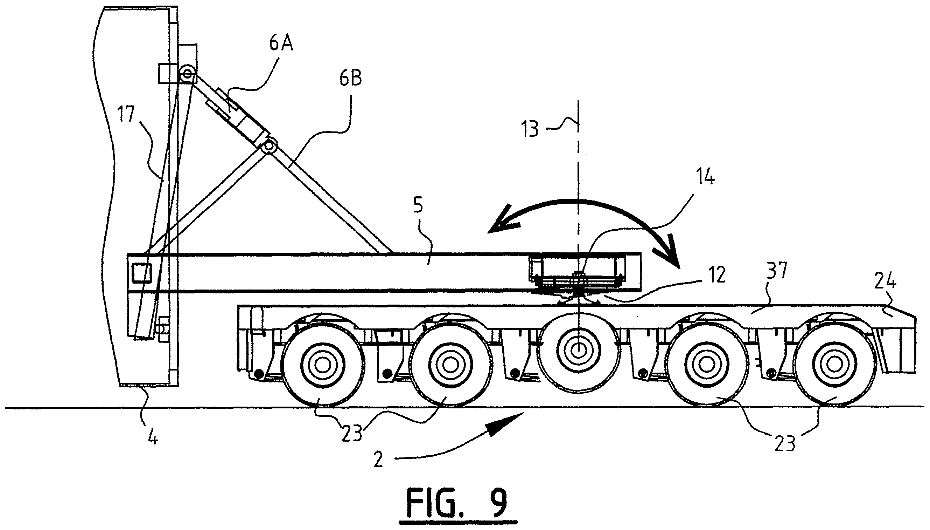

The configuration of the upper support 6 can also be other than in the foregoing examples, for instance have a relatively short cylinder 6A standing on a triangular support frame 6B (fig. 8). A similar configuration can also be chosen for the device 1 on the rear of load 4, which supports on a rear axle system 37 (fig. 9).

The rotation of coupling 12 about vertical axis 13 is useful for optimal manoeuvrability of the combination of tractive vehicle, load and rear dolly (fig. 10). The rotation of the support device relative to the axle system can herein be automatically converted into a steering movement of axles 33, for instance by making use of cylinders corresponding to the master cylinders 25 shown in fig. 2-7. It is however also possible to manually operate the rear steering, which is used in manoeuvring at very low speed, using a separate steering pump which feeds the steering cylinders of axles 23.

During road transport of load 4, wherein relatively high speeds are reached, there is the danger of the movement of the rear axle system (rear dolly 37) on the vertical axis 13 becoming unstable. In this case the coupling 12 can be blocked against rotation (fig. 11), for instance by pins 38 which can be retracted and extended manually, pneumatically or hydraulically and which form a rigid connection between chassis 24 of dolly 37 and the lower supports 5 of support device 1. The rear axle system 37 hereby follows load 4 and displays the steering behaviour of a semi-trailer.

Owing to the chosen construction of device 1 with the movable supports 5, 6 which engage directly on the load 4 for transporting, loads of very diverse dimensions can be picked up. Furthermore, because some of the supports absorb the weight of the load and only tensile forces act on the other supports, the use of relatively heavy and voluminous adapters can be dispensed with, whereby the payload can be higher at a given weight of the combination, and the combination is easier to manoeuvre.

Although the invention is elucidated above with reference to a number of embodiments, it will be apparent that it is not limited thereto. More or fewer supports could thus be used than shown here, while the form and configuration thereof could also be varied. In addition, moving mechanisms other than the shown hydraulic cylinders could also be applied. Connections between the supports and the load other than the plates shown here can of course also be envisaged. Different support devices can further be used on the front and rear side of the load, wherein a device according to the invention could optionally even be combined with a conventional adapter.

The scope of the invention is therefore defined solely by the following claims.

## Claims

1. Method for supporting on an undercarriage (2) an end (3) of a self-supporting load (4), in particular a tower section of a wind turbine, wherein the end (3) of the load (4) is engaged directly by at least one lower support (5) and at least one upper support (6), wherein each support (5,6) has one end connected to the undercarriage (2), while another end (7) of the at least one lower support (5) engages a lower part of the end (3) of the load (4) and another end (8) of the at least one upper support (6) engages an upper part of the end (3) of the load (4), so that the lower (5) and upper (6) supports enclose an acute angle (α) in a vertical plane, and wherein at least the upper (6) or lower support(s) (5) is/are adjustable in lengthwise direction, **characterized in that** the angle (α) between the lower and upper supports (5, 6) can be adapted to the dimensions of the end (3) of the load (4) by actuating moving means (17), in the form of an hydraulic cylinder, connected between the lower support(s) (5) and said other end of the upper support (6).

2. Method as claimed in claim 1, **characterized in that** the angle (α) between the supports (5,6) is adapted such that only some (6) of the supports (5, 6) absorb the weight of the load (4) and the rest (5) of the supports (5,6) absorb only longitudinal forces from the load (4).

3. Method as claimed in claim 2, **characterized in that** the support (s) (6) taking up the weight of the load (4) enclose (s) an acute angle with the horizontal, and the rest (5) of the supports (5,6) runs substantially horizontally.

4. Method as claimed in any of the foregoing claims, **characterized in that** the supports (5,6) converge at or close to a point where the forces are transmitted into the undercarriage (2).

5. Method as claimed in any of the foregoing claims, **characterized in that** the different supports (5,6) are placed successively into engagement with the load (4) and then moved to a position in which the load (4) is lifted.

6. Device (1) for supporting on an undercarriage (2) an end (3) of a self-supporting load (4), in particular a tower section of a wind turbine, comprising at least one lower support (5) and at least one upper support (6) which enclose an acute angle (α) with each other in a vertical plane, one end (9,15) of each support (5,6) being connected to the undercarriage (2), the other end (7) of the at least one lower support (5) being adapted to engage on a lower part of the end (3) of the load (4) and the other end (8) of the at least one upper support (6) being adapted to engage on an upper part of the end (3) of the load (4), and at least one (6) of the supports (5, 6) being adjustable in lengthwise direction, **characterized in that** the lower and upper supports (5,6) are movable relative to each other for the purpose of adjusting the angle (α) enclosed therebetween to the dimensions of the end (3) of the load (4) by hydraulic moving means (17) arranged between the supports (5, 6), said moving means (17) comprising at least one hydraulic cylinder having one end connected to the lower support(s) (5) and the other end engaging on said other end of the upper support(s) (6).

7. Device (1) as claimed in claim 6, **characterized in that** the supports (5,6) are adapted to be loaded substantially in only lengthwise direction.

8. Device (1) as claimed in claim 7, **characterized in that** the support (6) adjustable in lengthwise direction encloses an acute angle with the horizontal, and at least one non-adjustable support (5) runs substantially horizontally.

9. Device (1) as claimed in any of the claims 6-8, **characterized by** means (12) for coupling the supports (5,6) to the undercarriage, wherein the lower and upper supports (5,6) converge in the vicinity of the coupling means (12).

10. Device (1) as claimed in claim 9, **characterized in that** the coupling means (12) are rotatable relative to the undercarriage (2).

11. Device (1) as claimed in claim 10, **characterized by** means (38) for blocking the rotation movement of the coupling means (12).

12. Device (1) as claimed in any of the claims 9-11, **characterized by** two non-adjustable supports (5) lying in the same substantially horizontal plane.

13. Device (1) as claimed in claim 12, **characterized in that** the ends (9) of the two supports (5) running substantially horizontally are connected by a beam (10).

14. Combination of an undercarriage (2) and a device (1) as claimed in any of claims 6-13.

## Patentansprüche

1. Verfahren zum Haltten eines Endes (3) einer selbstragenden Last (4), insbesondere eines Mastabschnitts einer Windturbine, auf einem Fahrwerk (2), wobei an dem Ende (3) der Last (4) direkt durch wenigstens eine untere Stütze (5) und wenigstens eine obere Stütze (6) eingegriffen wird, wobei jede Stütze (5, 6) ein Ende mit dem Fahrwerk (2) verbunden hat, während ein anderes Ende (7) der wenigstens einen unteren Stütze (5) an einem unteren Teil des Endes (3) der Last (4) angreift und ein anderes Ende (8) der wenigstens einen oberen Stütze (6) an einem oberen Teil des Endes (3) der Last (4) angreift, so dass die unteren (5) und oberen (6) Stützen in einer Vertikalebene einen spitzen Winkel (α) einschließen, und wobei zumindest die obere (6) und/oder untere Stütze(n) (5) in der Längsrichtung einstellbar ist/sind, **dadurch gekennzeichnet, dass** der Winkel (α) zwischen den unteren und oberen Stützen (5, 6) durch Bewegungsantriebseinrichtungen (17) in der Form eines Hydraulikzylinders, die zwischen der/den unteren Stütze(n) (5) und dem anderen Ende der oberen Stütze (6) angeschlossen sind, an die Abmessungen des Endes (3) der Last (4) angepasst werden kann.

2. Verfahren nach Anspruch 1, **dadurch gekennzeichnet, dass** der Winkel (α) zwischen den Stützen (5, 6) derart angepasst wird, dass nur einige (6) der Stützen (5, 6) das Gewicht der Last (4) aufnehmen und der Rest (5) der Stützen (5, 6) nur Längskräfte von der Last (4) aufnimmt.

3. Verfahren nach Anspruch 2, **dadurch gekennzeichnet, dass** die Stütze(n), die das Gewicht der Last (4) aufnimmt/aufnehmen, einen spitzen Winkel mit der Horizontalen einschließt/en, und der Rest (5) der Stützen (5, 6) im Wesentlichen horizontal verläuft.

4. Verfahren nach einem der vorhergehenden Ansprüche, **dadurch gekennzeichnet, dass** die Stützen (5,6) an oder nahe einem Punkt konvergieren, wo die Kräfte in das Fahrwerk übertragen (2) werden.

5. Verfahren nach einem der vorhergehenden Ansprüche, **dadurch gekennzeichnet, dass** die verschiedenen Stützen (5, 6) nacheinander in Eingriff mit der Last (4) gebracht werden und dann zu einer Position bewegt werden, in der die Last (4) angehoben wird.

6. Vorrichtung (1) zum Halten eines Endes (3) einer selbstragenden Last (4), insbesondere eines Mastabschnitts einer Windturbine, auf einem Fahrwerk (2), die aufweist:
wenigstens eine untere Stütze (5) und wenigstens eine obere Stütze (6), die in einer Vertikalebene einen spitzen Winkel (α) miteinander einschließen, wobei ein Ende (9, 15) jeder Stütze (5, 6) mit dem Fahrwerk (2) verbunden ist, wobei das andere Ende (7) der wenigstens einen unteren Stütze (5) geeignet ist, auf einem unteren Teil des Endes (3) der Last (4) anzugreifen, und das andere Ende (8) der wenigstens einen oberen Stütze (6) geeignet ist, auf einem oberen Teil des Endes (3) der Last (4) anzugreifen, und wobei wenigstens eine (6) der Stützen (5, 6) in der Längsrichtung einstellbar ist, **dadurch gekennzeichnet, dass** die unteren und oberen Stützen (5, 6) relativ zueinander zu dem Zweck beweglich sind, den zwischen ihnen eingeschlossenen Winkel (α) durch die hydraulischen Bewegungseinrichtungen (17), die zwischen den Stützen (5, 6) angeordnet sind, auf die Abmessungen des Endes (3) der Last (4) einzustellen, wobei die hydraulischen Bewegungseinrichtungen (17) wenigstens einen Hydraulikzylinder aufweisen, der ein Ende mit der/den unteren Stütze(n) (5) verbunden hat und dessen anderes Ende auf dem anderen Ende der oberen Stütze(n) (6) angreift.

7. Vorrichtung (1) nach Anspruch 6, **dadurch gekennzeichnet, dass** die Stützen (5, 6) geeignet sind, im Wesentlichen nur in der Längsrichtung beladen zu werden.

8. Vorrichtung (1) nach Anspruch 7, **dadurch gekennzeichnet, dass** die Stütze (6), die in der Längsrichtung einstellbar ist, einen spitzen Winkel mit der Horizontalen einschließt und wenigstens eine nicht einstellbare Stütze (5) im Wesentlichen horizontal verläuft.

9. Vorrichtung (1) nach einem der Ansprüche 5-8, **gekennzeichnet durch** Einrichtungen (12) zum Koppeln der Stützen (5, 6) mit einem Fahrwerk, wobei die unteren und oberen Stützen (5, 6) in der Nachbarschaft der Kopplungseinrichtungen (12) konvergieren.

10. Vorrichtung (1) nach Anspruch 9, **dadurch gekennzeichnet, dass** die Kopplungseinrichtungen (12) relativ zu dem Fahrwerk (2) drehbar sind.

11. Vorrichtung (1) nach Anspruch 10, **gekennzeichnet durch** Einrichtungen (38) zum Sperren der Drehbewegung der Kopplungseinrichtungen (12).

12. Vorrichtung (1) nach einem der Ansprüche 9-11, **gekennzeichnet durch** zwei nicht einstellbare Stützen (5), die in der gleichen im Wesentlichen horizontalen Ebene liegen.

13. Vorrichtung (1) nach Anspruch 12, **dadurch gekennzeichnet, dass** die Enden (9) der zwei Stützen (5), die im Wesentlichen horizontal verlaufen, durch einen Träger (10) verbunden sind.

14. Kombination eines Fahrwerks (2) und einer Vorrichtung (1) nach einem der Ansprüche 6-13.

## Revendications

1. Procédé de support sur un châssis de roulement (2) d'une extrémité (3) d'une charge autoportante (4), en particulier une section de tour d'une éolienne, dans lequel l'extrémité (3) de la charge (4) est mise en prise directement par au moins un support inférieur (5) et au moins un support supérieur (6), dans lequel chaque support (5, 6) a une extrémité connectée au châssis de roulement (2), tandis qu'une autre extrémité (7) de l'au moins un support inférieur (5) met en prise une partie inférieure de l'extrémité (3) de la charge (4) et une autre extrémité (8) de l'au moins un support supérieur (6) met en prise une partie supérieure de l'extrémité (3) de la charge (4), de sorte que les supports inférieurs (5) et supérieurs (6) renferment un angle aigu (α) dans un plan vertical, et dans lequel au moins le ou les supports supérieur(s) (6) ou inférieur(s) (5) est/sont réglable(s) dans la direction de la longueur, **caractérisé en ce que** l'angle (a) entre les supports inférieurs et supérieurs (5, 6) peut être adapté aux dimensions de l'extrémité (3) de la charge (4) en actionnant des moyens de mouvement (17), sous la forme d'un cylindre hydraulique, connecté entre le ou les support(s) inférieur(s) (5) et ladite autre extrémité du support supérieur (6).

2. Procédé selon la revendication 1, **caractérisé en ce que** l'angle (a) entre les supports (5, 6) est adapté de sorte que seuls certains (6) des supports (5, 6) absorbent le poids de la charge (4) et le reste (5) des supports (5, 6) absorbent uniquement les forces longitudinales de la charge (4).

3. Procédé selon la revendication 2, **caractérisé en ce que** le ou les support(s) (6) supportant le poids de la charge (4) renferme(nt) un angle aigu par rapport à l'horizontale, et le reste (5) des supports (5, 6) s'étendent sensiblement horizontalement.

4. Procédé selon l'une quelconque des revendications précédentes, **caractérisé en ce que** les supports (5, 6) convergent en un point ou à proximité d'un point où les forces sont transmises dans le châssis de roulement (2).

5. Procédé selon l'une quelconque des revendications précédentes, **caractérisé en ce que** les différents supports (5, 6) sont placés successivement en prise avec la charge (4), puis déplacés jusqu'à une position dans laquelle la charge (4) est soulevée.

6. Dispositif (1) de support sur un châssis de roulement (2) d'une extrémité (3) d'une charge autoportante (4), en particulier une section de tour d'une éolienne, comprenant au moins un support inférieur (5) et au moins un support supérieur (6) qui renferment un angle aigu (α) l'un par rapport à l'autre dans un plan vertical, une extrémité (9, 15) de chaque support (5, 6) étant connectée au châssis de roulement (2), l'autre extrémité (7) de l'au moins un support inférieur (5) étant adaptée pour se mettre en prise sur une partie inférieure de l'extrémité (3) de la charge (4) et l'autre extrémité (8) de l'au moins un support supérieur (6) étant adaptée pour se mettre en prise sur une partie supérieure de l'extrémité (3) de la charge (4), et au moins l'un (6) des supports (5, 6) étant réglable dans la direction de la longueur, **caractérisé en ce que** les supports inférieurs et supérieurs (5, 6) sont mobiles les uns par rapport aux autres afin de régler l'angle (a) renfermé entre ceux-ci aux dimensions de l'extrémité (3) de la charge (4) par des moyens de mouvement hydraulique (17) agencés entre les supports (5, 6), lesdits moyens de mouvement (17) comprenant au moins un cylindre hydraulique ayant une extrémité connectée au(x) support(s) inférieur(s) (5) et l'autre extrémité étant en prise sur ladite autre extrémité du ou des support(s) supérieur(s) (6).

7. Dispositif (1) selon la revendication 6, **caractérisé en ce que** les supports (5, 6) sont adaptés pour être chargés sensiblement dans la direction de la longueur uniquement.

8. Dispositif (1) selon la revendication 7, **caractérisé en ce que** le support (6) réglable dans la direction de la longueur renferme un angle aigu par rapport à l'horizontale, et au moins un support non réglable (5) s'étend sensiblement horizontalement.

9. Dispositif (1) selon l'une quelconque des revendications 6 à 8, **caractérisé par** des moyens (12) pour coupler les supports (5, 6) au châssis de roulement, dans lequel les supports inférieurs et supérieurs (5, 6) convergent à proximité des moyens de couplage (12).

10. Dispositif (1) selon la revendication 9, **caractérisé en ce que** les moyens de couplage (12) sont rotatifs par rapport au châssis de roulement (2).

11. Dispositif (1) selon la revendication 10, **caractérisé par** des moyens (38) pour bloquer le mouvement de rotation des moyens de couplage (12).

12. Dispositif (1) selon l'une quelconque des revendications 9 à 11, **caractérisé par** deux supports non réglables (5) se trouvant dans le même plan sensiblement horizontal.

13. Dispositif (1) selon la revendication 12, **caractérisé en ce que** les extrémités (9) des deux supports (5) s'étendant sensiblement horizontalement sont connectées par une poutre (10).

14. Combinaison d'un châssis de roulement (2) et d'un dispositif (1) selon l'une quelconque des revendications 6 à 13.
